(19) Europäisches Patentamt / European Patent Office / Office européen des brevets

(11) **EP 4 272 154 B1**

(12) **FASCICULE DE BREVET EUROPEEN**

(45) Date de publication et mention de la délivrance du brevet:
**11.02.2026 Bulletin 2026/07**

(21) Numéro de dépôt: **21854679.4**

(22) Date de dépôt: **24.12.2021**

(51) Classification Internationale des Brevets (IPC):
**G06T 7/00** *(2017.01)*

(52) Classification Coopérative des Brevets (CPC):
**G06T 7/001;** G06T 2207/10081; G06T 2207/30164

(86) Numéro de dépôt international:
**PCT/FR2021/052452**

(87) Numéro de publication internationale:
**WO 2022/144523 (07.07.2022 Gazette 2022/27)**

(54) **PROCEDE DE TRAITEMENT D'IMAGES VOLUMIQUES PAR ANALYSE EN COMPOSANTES PRINCIPALES**

VERFAHREN ZUR VERARBEITUNG VON VOLUMENBILDERN DURCH HAUPTKOMPONENTENANALYSE

METHOD FOR PROCESSING VOLUME IMAGES BY MAIN COMPONENTS ANALYSIS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2020 FR 2014274**

(43) Date de publication de la demande:
**08.11.2023 Bulletin 2023/45**

(73) Titulaires:
• **SAFRAN**
  **75015 Paris (FR)**
• **SAFRAN AIRCRAFT ENGINES**
  **75015 Paris (FR)**
• **Ecole Normale Supérieure Paris-Saclay**
  **91190 Gif-sur-Yvette (FR)**
• **Centre National de la Recherche Scientifique**
  **75016 Paris (FR)**

(72) Inventeurs:
• **SCHNEIDER-DIE-GROSS, Julien, Paul**
  **77550 Moissy-Cramayel (FR)**
• **JAILIN, Clément**
  **91190 Gif-sur-Yvette (FR)**
• **MENDOZA QUISPE, Arturo**
  **77550 Moissy-Cramayel (FR)**

• **ROUX, Stéphane**
  **75016 Paris (FR)**

(74) Mandataire: **Cabinet Beau de Loménie**
  **103, rue de Grenelle**
  **75340 Paris Cedex 07 (FR)**

(56) Documents cités:
• **MCKEAND AUSTIN M ET AL: "Stochastic analysis and validation under aleatory and epistemic uncertainties", RELIABILITY ENGINEERING AND SYSTEM SAFETY, ELSEVIER APPLIED SCIENCE, GB, vol. 205, 2 October 2020 (2020-10-02), XP086339145, ISSN: 0951-8320, [retrieved on 20201002], DOI: 10.1016/ J.RESS.2020.107258**
• **KOUNTCHEV ROUMEN ET AL: "PCA-based Adaptive Hierarchical Transform for correlated image groups", 2013 11TH INTERNATIONAL CONFERENCE ON TELECOMMUNICATIONS IN MODERN SATELLITE, CABLE AND BROADCASTING SERVICES (TELSIKS), IEEE, vol. 1, 16 October 2013 (2013-10-16), pages 323 - 332, XP032539873, ISBN: 978-1-4799-0899-8, [retrieved on 20140107], DOI: 10.1109/ TELSKS.2013.6704941**

EP 4 272 154 B1

**Description**

Domaine Technique

L'invention s'inscrit dans le domaine de la conception, de la caractérisation et du suivi de pièces pour l'industrie, notamment des pièces devant subir des sollicitations mécaniques importantes, comme par exemple des pièces de moteurs d'avions. L'invention concerne tout particulièrement les dispersions qui apparaissent dans une série de pièces.

Technique antérieure

Dans l'art antérieur, la fabrication des aubes (« aubes fan ») de turbomachines d'aéronef est un procédé particulièrement critique. Ces aubes sont généralement réalisées en matériau tissé noyé dans une matrice de résine. Le tissage peut être un tissage 2D ou 3D.

La structure tissée apparait donc comme une structure qui doit avoir une forme attendue mais qui peut cependant présenter des variabilités de microstructure (comme par exemple un espacement entre torons). Il est généralement souhaité de minimiser ces variabilités de microstructure. Pour une série de pièces, on peut également parler de dispersions statistiques des propriétés mécaniques et l'on souhaite quantifier ces dispersions.

Par dispersion ou par dispersion statistique, on entend toute variabilité d'une caractéristique (taille, forme, constitution, microstructure, etc.) pouvant apparaître entre des pièces différentes issues d'une même chaine de fabrication. Cette dispersion peut être acceptable ou non, en fonction d'un cahier des charges établi préalablement.

Dans les technologies composites utilisant un renfort fibreux sous forme de tissage (2D et 3D), il est connu que la dispersion en terme de caractéristiques mécaniques est essentiellement introduite par la dispersion dite géométrique du renfort textile, une fois tissé puis injecté/imprégné. La dispersion géométrique est une dispersion qui vise la variabilité géométrique, par exemple la forme, le positionnement, etc.

Il est particulièrement délicat de connaitre le lien entre la dispersion géométrique et la dispersion sur les propriétés mécaniques. Des tests sur des plaques planes présentant différentes structures composites sont habituellement réalisés pour quantifier les dispersions sur les propriétés mécaniques (raideurs, résistances ultimes, limite d'endurance, courbes de Wohler, etc...) pour ensuite les prendre en compte sur le produit final (pièce). Ces tests sont particulièrement coûteux.

On peut noter qu'il existe des dispersions observables au niveau des matériaux (par exemple une plaque tissée) et des dispersions observables au niveau des pièces finies.

De l'état de la technique antérieure, on connait le document FR 13 63095 qui décrit une méthode exploitant la tomographie aux rayons X (CT pour « *Computed Tomography* »). Ce moyen expérimental exploite l'absorption différentielle des rayons X par différents matériaux pour reconstruire, par le calcul, à partir d'une série de radiographies, une image tridimensionnelle de la pièce étudiée. L'information contenue dans les images de tomographie est précieuse car elle concerne l'ensemble du volume de la pièce et donne accès non seulement à la microstructure de celle-ci mais aussi potentiellement à ses défauts.

Dans ce document antérieur, on met en œuvre une Corrélation d'Images Volumiques (CIV) appliquée à des images de tomographie aux rayons X. La solution proposée dans ce document permet de mesurer une différence géométrique entre deux échantillons.

De l'état de la technique antérieure, on connait par ailleurs le document « Stochastic analysis and validation under aleatory and epistemic uncertainties » ( MCKEAND AUSTIN M ET AL, RELIABILITY ENGINEERING AND SYSTEM SAFETY, ELSEVIER APPLIED SCIENCE, GB, vol. 205, 2 octobre 2020, XP32539873, ISSN : 0951-8320, DOI : 10.1016/J.RESS.2020.107258) qui décrit l'inspection de composants de turbomachines à partir d'image de tomographie aux rayons X.

Enfin, on connait le document « PCA-based Adaptative Hierarchical Transform for correlated image groups » (KOUNTCHEV ROUMEN ET AL, 2013 11TH INTERNATIONAL CONFERENCE ON TELECOMMUNICATIONS IN MODERN SATELLITE, CABLE AND BROADCASTING SERVICES (TELSIKS), IEEE, vol. 1, 16 octobre 2013, pages 323-332, XP32539873, DOI : 10.1109/TELSKS. 2013.6704941, ISBN : 978-1-4799-0899-8) décrit une méthode d'analyse en composantes principale.

La corrélation d'images volumiques appliquée à seulement deux images ne permet pas d'illustrer les dispersions mentionnées ci-avant pour un ensemble de pièces. L'invention vise notamment à pallier cet inconvénient.

Exposé de l'invention

A cet effet, l'invention propose un procédé de traitement d'une pluralité d'images volumiques de tomographie aux rayons X chacune associée à une pièce (par exemple une pièce d'une série de pièces ; par exemple, chaque pièce de la série de pièce est associée à une image volumique de la pluralité d'image volumiques), pour quantifier la dispersion géométrique entre des pièces, la pluralité d'images volumiques comprenant une image volumique de référence, comportant :

- une étape de corrélation d'images volumiques pour obtenir un champ de déplacement entre chaque image et l'image de référence, pour obtenir une pluralité de champs de déplacement minimisant la différence entre les images volumiques (en d'autres termes, l'application du champ de déplacement permet d'avoir des images volumiques qui coïncident le plus possible),
- un traitement par une méthode de réduction de la dimensionnalité de la pluralité des champs de déplacement pour les exprimer selon des modes propres,
- une analyse statistique des champs exprimés selon les modes propres.

Le procédé peut être appliquée à des images volumiques de tomographies aux rayons X chacune associée à des pièces différentes.

L'étude des dispersions ou des dispersions statistiques à partir de la seule géométrie des pièces ou d'images volumiques est trop complexe pour mettre en œuvre des analyses statistiques utiles. Il a été observé que de l'étude des champs de déplacement qui vient à faire coïncider les images volumiques, avec tout d'abord une réduction de la dimensionnalité, on peut déduire aisément et de manière performante des informations statistiques par l'analyse statistique.

En fait, l'espace des modes propres qui sont définis par la méthode de réduction de la dimensionnalité est un bon espace pour représenter les variations géométriques qui sont les plus fréquentes et donc faire apparaitre les anomalies (« outliers » en langue anglaise) qui peuvent apparaître sur certaines pièces.

Les méthodes connues sous le nom de « méthodes de réduction de dimensionnalité » sont visées ici, et plus particulièrement les méthodes connues comme « spectrales ». Ces méthodes comprennent en général deux étapes (i) la construction d'une matrice et (ii) l'extraction des modes propres de cette matrice.

La méthode de ce type la plus connue est l'analyse en composantes principales (ACP ou « PCA : Principal Component Analysis » en anglais). On connait d'autres méthodes telles que celles appelées « Kernel Principal Component Analysis » ( »Nonlinear Component Analysis as a Kernel Eigenvalue Problem », Scholkopf et al., Neural Computation, vol. 10, no. 5, pp. 1299-1319, 1998), « Isomap » (« A global geometric framework for nonlinear dimensionality reduction », Tenenbaum et al., . Science, 290:2319-2323, December 2000), « Locally Linear Embedding » (« Nonlinear dimensionality reduction by locally linear embedding », Saul & Roweis, Science, v.290 no.5500 , Dec.22, 2000. pp.2323--2326), « Laplacian Eigenmaps » (« Laplacian Eigenmaps for Dimensionality Reduction and Data Representation » Belkin & Niyogi, Neural Computation 15, 1373-1396 (2003)), et « Maximum Variance Unfolding » (MVU, Weinberger and Saul, Kilian Q. and Lawrence K. (27 June 2004). Unsupervised learning of image manifolds by semidefinite programming. 2004 IEEE Computer Society Conference on Computer Vision and Pattern Recognition. 2. ). On peut noter que certaines de ces méthodes sont non-linéaires tandis que l'analyse en composantes principales est linaire, et que certaines de ces méthodes peuvent utiliser d'autres éléments pour construire ladite matrice.

En outre, certaines de ces méthodes peuvent être vues comme plusieurs ACPs (ou Kernel-PCAs) réalisés localement et combinées globalement selon différentes stratégies.

On peut noter qu'ici, la matrice en question est construite en combinant les champs de déplacements pondérés par la matrice d'incertitude.

Dès lors, on pourra identifier plus facilement une pièce défectueuse, par exemple si l'analyse statistique choisie illustre que cette pièce a un mode qui s'exprime d'une manière telle que cela peut correspondre à un défaut.

L'analyse statistique peut par exemple être une méthode de détection d'anomalies.

Selon un mode de mise en œuvre particulier, l'analyse statistique des champs exprimés selon les modes propres est une analyse graphique, au moyen d'une visualisation graphique.

Par exemple, on peut observer la distribution des pièces pour chaque mode, par exemple par un histogramme. On peut également représenter pour chaque pièce une valeur d'intensité associée à chaque mode pour déterminer si une pièce est anormale.

Selon un mode de mise en œuvre particulier, la méthode de réduction de la dimensionnalité est une « analyse en composantes principales » (ACP, plus connue sous l'expression anglaise « Principal Component Analysis : PCA »).

Il a été observé par les inventeurs de la présente invention que l'analyse en composantes principales est particulièrement efficace pour déterminer des modes propres pour les champs de déplacement qui sont choisis pour minimiser la différence avec l'image de référence.

En fait, l'espace des modes propres de l'ACP est un bon espace pour représenter les différences entre les champs de déplacement. Avec les amplitudes du champ de déplacement projetées sur les modes propres, on peut vérifier facilement si une pièce est trop éloignée de la pièce de référence. Ceci permet notamment d'écarter comme défectueuse une pièce qui en serait trop éloignée.

L'analyse en composantes principales a pour avantage de délivrer des combinaisons linéaires selon les modes, ce qui permet notamment d'observer l'influence d'un mode (par exemple en supprimant sa contribution).

Selon un mode de mise en œuvre particulier, la pluralité d'images contient N images chacune associée à un champ de déplacement $\vec{u}(\vec{x}, n)$ avec $n \in [1, N]$, et dans lequel le traitement par analyse en composantes principales permet d'exprimer un champ de déplacement selon la formule :

$$\vec{u}(\vec{x}, n) = \sum_{j}^{p} \vec{s}_j(\vec{x})\, \sigma_j\, \beta_{jn}$$

avec $\vec{x}_j(\vec{x})$ un mode propre (mode propre gauche),
$\sigma_j$ les valeurs propres,
$\beta_{jn}$ le mode propre droit associé (au mode gauche), et
$p$ le minimum entre le nombre de degrés de liberté de $\vec{u}(\vec{x}, n)$ et N.

Par exemple, $\vec{x}$ désigne une position et n et un entier compris entre 1 et N.

Par exemple, $p$ peut être égal à N, mais il est possible de choisir $p$ avec une valeur inférieure à $N$ pour limiter le nombre de modes traités.

Comme on peut le voir dans la formule ci-avant, on a bien une combinaison linéaire de modes, ce qui permet d'identifier facilement à quoi correspondent chaque mode sur les pièces.

Selon un mode de mise en œuvre particulier, on met en la méthode de réduction de la dimensionnalité sur une pluralité de champs de déplacement transformés $V_{ij}$ par la formule :

$$V_{ij} = C_{ik}^{-1/2} U_{kj}$$

avec $C_{ik}$ la matrice de covariance de la pluralité de champs de déplacement $U_{kj}$.

Par exemple avec i, j, et k des indices entiers.

.Ce mode de mise en œuvre particulier permet de mettre en œuvre une pondération des champs de déplacement par une mesure de l'incertitude (qui permet d'obtenir $C_{ik}$), qui ensuite permet de mettre en œuvre une analyse en composantes principales qui tienne compte de cette incertitude.

Selon un mode de mise en œuvre particulier, le traitement par analyse en composantes principales permet d'exprimer un champ de déplacement $\vec{u}(\vec{x}, n)$ selon la formule :

$$\vec{u}(\vec{x}, n) = \sum_{jk}^{p} C_{ik}^{1/2} \alpha_{kj}\, \vec{\phi}_i(\vec{x})\, \sigma_j\, \beta_{jn}$$

avec $C_{ik}$ la matrice de covariance de la pluralité de champs de déplacement, $\vec{\phi}_i(\vec{x})$ une base de fonctions de forme issues de la méthode des éléments finis, $\sigma_j$ les valeurs propres, $\alpha_{kj}$ un mode propre gauche, et $\beta_{jn}$ le mode propre droit associé (au gauche).

Par exemple, $\vec{x}$ désigne une position et n et un entier compris entre 1 et N.

Par exemple, i, j, et k sont des indices entiers. $p$ peut être égal à $N$, mais il est possible de choisir $p$ avec une valeur inférieure à $N$ pour limiter le nombre de modes traités.

Par exemple, on a une base de données U constituée de $n$ réalisations ($j = 1, ..., n$) de champs de déplacement $U_{ij}$ ayant chacun $q$ degrés de liberté (i = 1, ..., q).Ce mode de mise en œuvre particulier est une alternative à la définition présentée ci-avant pour $\vec{u}(\vec{x}, n)$. Cette formulation est avantageuse mais nécessite d'élaborer la matrice de covariance.

Selon un mode de mise en œuvre particulier, le procédé comporte en outre une détermination d'une image moyenne $\bar{\hat{g}}(\vec{x})$:

$$\hat{g}(\vec{x}) = \left(\frac{1}{N}\right) \sum_{n=1}^{N} \tilde{g}(\vec{x}, n)$$

avec $N$ le nombre d'images et $\bar{\tilde{g}}(\vec{x}, n)$ les images obtenues après application du champ de déplacement $\vec{u}(\vec{x}$ :

$$\tilde{g}(\vec{x}) = g\big(\vec{x} + \vec{u}(\vec{x})\big).$$

Cette image moyenne est une bonne représentation statistique d'une pièce qui représente la pluralité de pièces.

Dans ce mode de mise en œuvre particulier, on obtient par les champs de déplacement qui ont été déterminé, une pièce moyenne. Cette obtention est moins complexe qu'une détermination d'une pièce moyenne à partir des seules images volumiques.

Selon un mode de mise en œuvre particulier, dans lequel l'une des caractéristiques de production des pièces peut varier, le procédé comporte en outre une détermination d'un ou plusieurs modes affectés par cette caractéristique, et une détermination de l'influence de la caractéristique sur la géométrie des pièces.

Par exemple, pour une pièce tissée, on sait que certains paramètres des métiers à tisser ont un effet sur la géométrie du textile. Il est néanmoins très difficile de déterminer ou de classer ces paramètres ayant une influence significative. Cette difficulté résulte des forts couplages entre les paramètres (moulage et tension des torons pour les pièces tissées, par exemple).

Dans les méthodes selon l'art antérieur, l'identification de ces paramètres impliquait la réalisation d'un panneau suffisamment grand pour permettre ensuite l'usinage des éprouvettes matériaux pour ensuite pouvoir réaliser des essais mécaniques.

Par éprouvettes matériaux, on entend un échantillon suffisamment grand pour être représentatif du matériau à étudier. En fait, les éprouvettes sont généralement conçues pour étudier un phénomène spécifique du matériau (par exemple le comportement en fatigue).

Lorsqu'une pluralité de pièces ou d'échantillons est réalisée avec différents procédés, ou différentes valeurs de paramètres caractérisant ce procédé, alors la caractérisation des amplitudes de déplacement par rapport à la pièce de référence selon les modes de l'ACP, permet de déterminer si cette variante de procédé, ou bien si ce paramètre, a une influence significative.

L'invention proposée peut également être appliquée lors d'un procédé de fabrication d'une pièce à partir du procédé de traitement d'une pluralité d'images volumiques tel que défini ci-avant.

En particulier, ce procédé est adapté si des caractéristiques de production sont identifiées comme ayant un impact (visible sur un ou plusieurs modes), et si ces caractéristiques sont changées au cours du procédé de fabrication.

A titre indicatif, la caractéristique peut être une caractéristique de mise en place d'une pièce tissée. Par exemple, un mode ou plusieurs modes associés à un déplacement de translation peuvent illustrer cette caractéristique.

La caractéristique peut être relative à la mise en forme des renforts. Par exemple un mode ou plusieurs modes associés à des distorsions ou des élongations peuvent illustrer ces caractéristiques.

L'invention propose également un procédé de suivi d'une chaîne de fabrication de pièces comprenant une acquisition d'images volumiques de tomographie aux rayons X des pièces et une mise en œuvre du procédé de traitement tel que défini ci-avant.

Dans ce procédé, on peut en outre écarter une pièce qui apparait comme trop éloignée des autres pièces selon l'analyse en composantes principales.

Selon un mode de mise en œuvre applicable à tous les procédés tels que définis ci-avant, les pièces comprennent un matériau composite (par exemple avec un tissage, une stratification et un tressage, etc.).

Selon un mode de mise en œuvre particulier, la pièce est dans un étant dans lequel aucune injection de résine n'a été mise en œuvre (par exemple tissée et sans résine).

Il a été observé qu'une réduction de la dimensionnalité suivie d'une analyse statistique permet d'obtenir des résultats sur des pièces composites, par exemple tissées, avant leur injection car la géométrie du textile peut déjà être étudiée après le tissage, par exemple. En fait, la pièce tissée sans injection est une préforme placée dans un moule, et l'absence de résine facilite l'obtention des images car le contraste (toron/air) est meilleur qu'en présence de résine.

Selon un mode de mise en œuvre particulier applicable à tous les procédés tels que décrits ci-avant, la pièce est une aube de turbomachine pour aéronef.

L'invention propose également un système de traitement d'une pluralité d'images volumiques de tomographie aux rayons X chacune associée à une pièce, pour quantifier la dispersion géométrique entre des pièces, la pluralité d'images volumiques comprenant une image volumique de référence, le système comportant :

- un module de corrélation d'images volumiques pour obtenir un champ de déplacement entre chaque image et l'image de référence, pour obtenir une pluralité de champs de déplacement minimisant la différence entre les images volumiques (en d'autres termes, l'application du champ de déplacement permet d'avoir des images volumiques qui coïncident le plus possible),
- un module de traitement par une méthode de réduction de la dimensionnalité de la pluralité des champs de déplacement pour les exprimer selon des modes propres,
- un module d'analyse statistique des champs exprimés selon les modes propres.

Ce système peut être configuré pour la mise en œuvre de tous les modes de mise en œuvre des procédés tels que décrits ci-avant. En outre, ce système peut être un système informatique (par exemple un ordinateur).

L'invention propose également un programme d'ordinateur comportant des instructions pour l'exécution des étapes d'un procédé de traitement tel que défini ci-avant lorsque ledit programme est exécuté par un ordinateur.

A noter que les programmes d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention propose également un support d'enregistrement lisible par un ordinateur sur lequel est enregistré un programme d'ordinateur comprenant des instructions pour l'exécution des étapes d'un procédé de sécurisation d'image tel que défini ci-avant.

L'invention propose également un support d'enregistrement lisible par un ordinateur sur lequel est enregistré un programme d'ordinateur comprenant des instructions pour l'exécution des étapes d'un procédé de traitement tel que défini ci-avant.

Les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] La figure 1 est une représentation schématique d'un procédé selon un exemple.

[Fig. 2] La figure 2 est une représentation schématique d'un système selon un exemple.

Description des modes de réalisation

On va maintenant décrire un procédé de traitement d'images volumiques de tomographie aux rayons X chacune associées à une pièce.

Dans ce qui suit, les pièces sont des pièces tissées, typiquement des aubes de turbomachine pour aéronef.

L'invention n'est néanmoins pas limitée à ces pièces et peut s'appliquer à toute pièce tissée composite, dont les images tomographiques peuvent être suivies par corrélation d'images volumiques. La méthode peut être appliquée à une pièce en composite tressée ou à une pièce en composite stratifié (deux composites tissés) dans la mesure où la résolution permet de différencier les couches d'unidirectionnels stratifiés.

Le procédé décrit ici permet de quantifier la dispersion géométrique entre des pièces, et il permet notamment de déterminer si une pièce est acceptable ou non (par exemple en utilisant des seuils donnés).

Ce procédé peut donc être utilisé dans un procédé de suivi de chaîne de production, dans un procédé de conception, ou dans un procédé de fabrication de pièce.

On peut noter que les inventeurs de la présente invention ont obtenu des images volumiques pour un ensemble de 64 aubes fan de turbomachine d'aéronef qui ont été observées par micro-tomographie. Parmi cet ensemble d'aubes, une est choisie comme référence (la première dans la liste, par exemple). Les autres aubes sont considérées comme les aubes de test (i.e., déformées).Comme cela serait décrit plus en détail ci-après, la CIV peut être appliquée aux 63 paires d'images (chacune des pièces courantes avec la référence) en utilisant la même décomposition cinématique pour obtenir des champs de déplacements. Cette décomposition est basée sur un maillage **EF** non structuré formé par des éléments tétraédriques. Similairement, la correction de niveaux de gris est réalisée sur un maillage formé par des éléments tétraédriques.

Les champs de déplacements obtenus sont peu exploitables car trop complexes, en particulier si l'on souhaite étudier une pièce par rapport aux autres.

Il est donc proposé de mettre en œuvre une méthode de réduction de la dimensionnalité pour exprimer les champs de déplacement selon un nombre réduit de modes bien choisis (les premiers modes, ceux avec les plus grandes valeurs propres). L'analyse en composantes principales est bien adaptée pour exprimer les champs selon des modes qui illustrent bien les distributions dans une série de pièces, mais d'autres méthodes peuvent être utilisées.

Ceci permet notamment de mettre en œuvre une analyse graphique ou l'on exprime l'intensité de chaque mode retenu par l'analyse en composantes principale avec des couleurs.

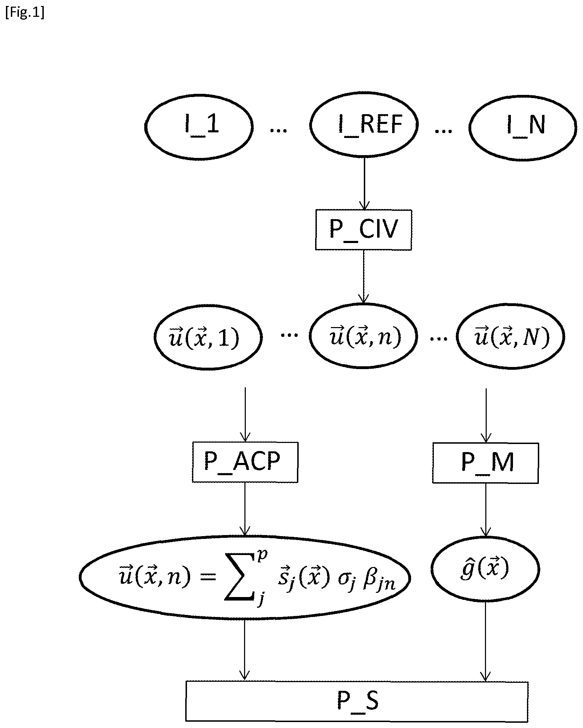

Dans le procédé de la figure 1, on utilise en entrée $N$ images volumiques de tomographie aux rayons X chacune associées à une pièce et notées $I\_1$ à $I\_N$. On utilise également une image volumique de référence $I\_ref$ comprise dans la pluralité d'images.

Dans une première étape du procédé P_CIV, on met en œuvre une corrélation d'images volumiques (CIV), par exemple selon la méthode décrite dans le document antérieur FR 13 63095. Comme expliqué ci-avant, on peut par exemple utiliser 64 images volumiques d'aubes fan ou d'autres pièces.

La CIV consiste à mesurer les champs de déplacement (volumiques) entre paires d'images (volumiques). Elle est basée sur le principe de conservation de niveaux de gris, qui s'écrit :

$$f(\vec{x}) = g\big(\vec{x} + \vec{u}(\vec{x})\big)$$

avec $f(\vec{x})$ l'image de référence $I\_ref$, une image de test $I\_test$ $g(\vec{x})$ (aussi appelée déformée) et un champ (vectoriel) de déplacement $\vec{u}(\vec{x})$ qui est décomposé sur une base de fonctions de forme $\vec{\phi}(\vec{x})$ issues de la méthode des éléments finis (EF) :

$$\vec{u}(\vec{x}) = \sum u_i \vec{\phi}_i(\vec{x})$$

En fait, on a choisi une image d'aube comme image référence et les 63 autres sont des images de test (i.e. déformées).

Ainsi, il est possible de calculer l'image déformée corrigée $I\_cor$ :

$$\tilde{g}(\vec{x}) = g\big(\vec{x} + \vec{u}(\vec{x})\big)$$

Le champ de résidu peut également se calculer de la manière suivante :

$$\rho(\vec{x}) = \tilde{g}(\vec{x}) - f(\vec{x})$$

Ainsi, le champ de déplacement optimal est celui qui minimise la norme $L_2$ des résidus $\rho(\vec{x})$ dans la région d'intérêt (ROI).

Il est important de noter le caractère Lagrangien du champ de déplacement, dans le sens où le champ de déplacement est exprimé dans le référentiel de l'image de référence.

Cette nouvelle image s'exprime dans le même espace (référentiel) que l'image de référence.

De plus, cette formulation peut être modifiée afin de prendre en compte des variations des niveaux de gris extrinsèques au déplacement comme les artefacts de reconstruction tomographique (artefact dit de « cupping » dû au durcissement du faisceau, ou encore l'effet de diffusion). Ainsi, la formulation étendue s'écrit :

$$f(\vec{x}) = g\big(\vec{x} + \vec{u}(\vec{x})\big) \cdot a(\vec{x}) + b(\vec{x})$$

Avec les champs (scalaires) qui contribuent aux changements de contraste $a(\vec{x})$ et aux changements de luminosité $b(\vec{x})$. Ces champs sont eux-mêmes projetés sur une base réduite avec des fonctions de forme $\psi(\vec{x})$ issues de la méthode des éléments finis :

$$a(\vec{x}) = \sum a_i \psi_i(\vec{x})$$

et

$$b(\vec{x}) = \sum b_i \psi_i(\vec{x}).$$

On notera que ces champs ne sont pas nécessairement décomposés sur la même base (maillage EF). De même, ces champs peuvent être ensuite régularisés par des techniques spécialisées (régularisation mécanique, régularisation par l'opérateur de Laplace). Ainsi, il est possible de distinguer entre les effets liés au déplacement et les effets liés au changement de niveaux de gris.

Ensuite, on peut mettre en œuvre l'étape P_ACP de traitement par analyse en composantes principales.

L'invention n'est néanmoins pas limitée à l'analyse en composantes principales et peut impliquer la mise en œuvre d'autres méthodes de réduction de la dimensionnalité.

L'analyse statistique proposée ici repose sur l'Analyse en Composantes Principales (ACP). Cette démarche consiste en une transformation orthogonale qui convertit une base de données U constituée de $n$ réalisations ($j = 1, ... , n$) de champs de déplacement $U_{ij}$ ayant chacun $q$ degrés de liberté ($i = 1, ... , q$), vers un ensemble de variables linéairement indépendantes. Ces réalisations seront les champs de déplacement par image. En effet, le théorème de décomposition en valeurs singulières affirme qu'il existe deux matrices unitaires

$$\boldsymbol{A} = \{\alpha_1, \alpha_2, ..., \alpha_q\}$$

et

$$\boldsymbol{B} = \{\beta_1, \beta_2, ..., \beta_n\}$$

de sorte que

$$\boldsymbol{U} = \boldsymbol{A}\boldsymbol{\Sigma}\boldsymbol{B}^\top$$

avec

$$\boldsymbol{\Sigma} = \mathrm{diag}(\sigma_1, \sigma_2, ..., \sigma_p)$$

avec $p = \min(q, n)$ et $\sigma_1 \geq \sigma_2 \geq \cdots \geq \sigma_p \geq 0$. Les valeurs de la diagonale de la matrice $\Sigma$ sont les valeurs propres tandis que les colonnes des matrices $\boldsymbol{A}$ et $\boldsymbol{B}$ sont les vecteurs propres (c'est-à-dire les modes) gauche et droite respectivement.

Il est possible de généraliser l'ACP via une pondération par une mesure d'incertitude. Si C désigne la matrice de covariance des champs de déplacement constituant la base de données, alors on aura avantage à introduire la base V constituée des $n$ champs de déplacement transformés, $V_{ij} = C_{ik}^{-1/2} U_{kj}$. La décomposition ACP de $\boldsymbol{V} = \boldsymbol{A}\boldsymbol{\Sigma}\boldsymbol{B}^\top$, permettra alors de revenir à des modes spatiaux sous la forme de champs de déplacement via $S_{ij} = C_{ik}^{1/2} A_{kj}$, ou $\vec{s}_j(\vec{x})$ = $S_{ij}\vec{\Phi}_i(\vec{x})$.

Dans le cas de la CIV, l'inverse de matrice de covariance des champs de déplacement est directement proportionnelle à la matrice de corrélation, $\boldsymbol{C^{-1}} \propto \boldsymbol{M}$. Lorsque le calcul de la matrice $\boldsymbol{C}^{1/2}$ est trop lourd à mettre en œuvre on peut se contenter d'une approximation simple en ne conservant que les éléments diagonaux de $\boldsymbol{M}$ comme approximation de $\boldsymbol{C}^{-1}$. Dans ce cas, $\left[\boldsymbol{C}^{1/2}\right]_{ij} \approx m_{ii}^{-\frac{1}{2}}\delta_{ij}$ (on peut noter que la convention de somme implicite sur les indices répétés, ou convention d'Einstein n'est pas suivie ici). Utiliser la décomposition ACP directement sur $\boldsymbol{U}$ peut être vue comme une approximation encore plus grossière de la matrice de covariance alors considérée comme proportionnelle à l'identité.

Pour la base de données de $N$ images $g(\vec{x}, n)$ avec $n \in [1, N]$ indiquant l'image en question, et une image de référence $f(\vec{x})$, la CIV sera appliquée afin d'obtenir les champs de déplacement $\vec{u}(\vec{x}, n)$ reliant chaque image de test de la base de données à l'image de référence choisie.

De plus, ce calcul donne accès aux $N$ images $\tilde{g}(\vec{x}, n)$ représentant la base de données exprimée dans un seul espace (référentiel), celui de l'image de référence.

Ainsi, deux analyses sont possibles :

- sur l'ensemble des images corrigées $\tilde{g}(\vec{x}, n)$ et
- sur l'ensemble des champs de déplacement $\vec{u}(\vec{x}, n)$.

La première analyse (étape P_M sur la figure 1) consiste en l'obtention de l'image moyenne des images corrigées

$$\hat{g}(\vec{x}) = \left(\frac{1}{N}\right) \sum_{n=1}^{N} \tilde{g}(\vec{x}, n)$$

qui représente « l'aube moyenne » de la base de données étudiée.

La deuxième analyse (étape P_ACP) consiste en l'obtention des modes propres décrivant la cinématique de la base de données (mouvement de corps rigide exclus). En effet, grâce à l'analyse ACP, tout champ de déplacement $\vec{u}(\vec{x}, n)$ appartenant à la base de données peut être décrit comme une combinaison linéaire

$$\vec{u}(\vec{x}, n) = \sum_{jk}^{p} C_{ik}^{1/2} \alpha_{kj} \, \vec{\phi}_i(\vec{x}) \, \sigma_j \, \beta_{jn} = \sum_{j}^{p} \vec{s}_j(\vec{x}) \, \sigma_j \, \beta_{jn},$$

avec $\vec{s}_i$ le vecteur propre gauche correspondant aux modes spatiaux, $\beta_{jn}$ le vecteur propre droit contenant les modes d'amplitude selon l'indexation des échantillons de la base, $\sigma_j$ la valeur propre associée. De cette manière, la collection de modes spatiaux renseigne sur la typologie (par exemple translation, rotation, mouvements de corps rigides, dilatation, déformation homogène, etc.) des déplacements observés dans la base de données incorporant la pondération adaptée aux incertitudes de mesure par CIV. Similairement, $\beta$ renseigne sur le poids des modes spatiaux dans les échantillons de la base de données.

Enfin, on peut mettre en œuvre une étape d'analyse P_S des champs exprimés selon les modes propres.

Ainsi, on accède à une analyse statistique « propre » de la base de données, d'autant plus que les modes sont orthogonaux entre eux via le produit scalaire $\langle \boldsymbol{a}, \boldsymbol{b} \rangle = \boldsymbol{a}^{\mathsf{T}} \boldsymbol{M} \, \boldsymbol{b}$. Il est alors possible de caractériser, par le biais des modes spatiaux, la distribution de la cinématique des aubes dans la base de données.

Bien que plusieurs méthodes existent pour caractériser une distribution probabiliste, nous pouvons citer comme exemple celui de l'estimation par fonctions Gaussiennes. Si cette méthode de mélange de Gaussiennes (« Gaussian Mixture Model » en anglais) est appliquée avec une seule Gaussienne, la dispersion observée peut être expliqué par une moyenne (c.f. l'aube moyenne) et une variation autour de cette moyenne.

De cette manière, il est alors possible de quantifier la dispersion statistique (d'un point de vue géométrique) sur les pièces testées (ce qui peut former l'étape d'analyse statistique). La méthode décrite ici est applicable à l'échelle du matériau ainsi qu'à l'échelle des pièces, à condition que l'image (tomographie ici) servant de support aux calculs des champs cinématiques ait une résolution suffisamment fine et permette de révéler les différences géométriques critiques vis-à-vis de la dispersion que l'on cherche à caractériser.

La méthode décrite en référence à la figure 1 peut être utilisée pour déterminer les caractéristiques de fabrication ayant une influence significative sur la géométrie des pièces.

A cet effet, on peut utiliser des pièces produites selon une quelconque variante de procédé de fabrication, la méthodologie ici proposée comprenant en outre une détermination du caractère significatif de cette variante.

Il faut noter que, par exemple, seulement certaines caractéristiques des métiers à tisser ont un effet sur la géométrie du textile. Néanmoins il est très difficile de les déterminer (ou les classer) en raison des forts couplages entre les caractéristiques (par exemple, l'espacement des torons et leur tension).

Avec le procédé décrit ci-avant, la réalisation de pièces avec différentes variantes de fabrication permet facilement d'identifier celles qui ont une influence significative par l'ACP. On pourra notamment déterminer celles dont l'influence dépasse un seuil donné et qui conduisent à des pièces inacceptables.

On peut également noter que pour les pièces tissées, il n'est pas nécessaire de réaliser des injections de résine si c'est la géométrie textile qui est étudiée ici.

La personne du métier saura choisir les paramètres et les régions des pièces les plus pertinentes à étudier (par exemple couches extérieures ou intérieures).

Le procédé décrit ci-avant permet en outre de quantifier la dispersion géométrique des N pièces.

Il convient de noter que l'ACP fournit ici une quantification de la dispersion « géométrique », sans informations sur les propriétés mécaniques des pièces.

Par contre, sous réserve de disposer d'une modélisation mécanique numérique fidèle d'une pièce, alors, il est facile de modifier la géométrie de la pièce telle que décrite par l'ACP, et d'en déduire l'effet d'une variabilité géométrique sur la variabilité d'une propriété mécanique. L'intérêt de l'ACP dans ce contexte est de limiter les calculs nécessaires aux modifications de géométrie données par les modes propres avec une amplitude définie par l'écart-type de la distribution des amplitudes modale.

Le procédé décrit ci-avant permet également de mettre en œuvre un suivi d'une chaîne de production de pièce.

Par exemple, en traitant chaque nouvelle pièce et son image volumique comme une image en plus dans la pluralité d'images à traiter, on peut mettre à jour l'analyse en composantes principales et vérifier que la nouvelle pièce n'est pas trop géométriquement différente des autres. Cela permet en outre d'observer des dérives de la chaîne de production.

Pour certaines pièces tissées (par exemple des aubes fan), la mise en place de la préforme dans son moule (mouvement rigide d'ensemble), ainsi que les mouvements locaux réalisés par l'opérateur (déformations locales) sont de premier ordre sur l'histoire de la pièce (en plus de ceux définis précédemment au niveau du matériau mais qui sont déjà prises en compte dans les méthodes de dimensionnement). Ainsi, même avec des tomographies à une échelle plus importante, comme celles utilisées pour le contrôle en série, il est possible de suivre des indicateurs clés sur le potentiel mécanique de la pièce, et donc de quantifier la dispersion d'une production donnée en fonction des tomographies considérées pour l'étude. Il s'agit de caractéristiques de la fabrication qui peuvent être identifiées ici.

De cette manière , il est possible de choisir volontairement une pièce vis-à-vis de la dispersion mesurée (pièce « moyenne » ou pièce aux extrémités de l'estimation du modèle statistique) et même de savoir a posteriori l'histoire d'une aube testée pour des essais de certification par rapport à une production qui arrivera ensuite et ainsi permettre de dégager des marges si l'aube était moyenne (on fait toujours l'hypothèse que l'aube utilisée pour l'essai est la pire de la production car il est impossible de la positionner sans la méthode proposée ici, comme on ne sait pas quelle est la pire des aubes, et l'on ajoute des conservatismes à l'aube testée afin d'être sûr qu'on a pris suffisamment de marge et que l'on couvrira l'ensemble d'une production).

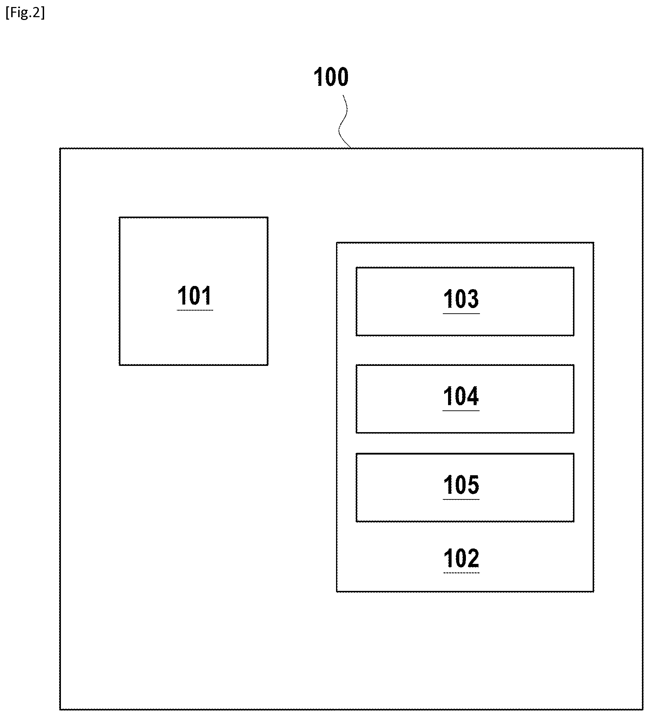

La figure 2 est une représentation schématique d'un système 100 capable de mettre en œuvre le procédé décrit en référence à la figure 1.

Ce système 100 comporte un processeur 101 et une mémoire non volatile 102 de sorte qu'il a la structure d'un système informatique.

Dans la mémoire 102, il comporte un programme d'ordinateur comprenant :

- des instructions 103 pour la mise en œuvre de l'étape P_CIV, et formant donc un module de corrélation d'images volumiques lorsqu'elles sont exécutées par le processeur 101, et
- des instructions 104 pour la mise en œuvre de l'étape P_ACP, et formant donc un module d'analyse en composantes principales lorsqu'elles sont exécutées par le processeur 101, et
- des instructions 105 pour la mise en œuvre de l'étape P_S, et formant donc un module d'analyse statistique lorsqu'elles sont exécutées par le processeur 101.

## Revendications

1. Procédé de traitement, mis en œuvre par un système informatique, d'une pluralité d'images volumiques (I_1, ..., I_N) de tomographie aux rayons X chacune associées à une pièce, pour quantifier la dispersion géométrique entre des pièces, la pluralité d'images volumiques comprenant une image volumique de référence, comportant :

   - une étape (P_CIV) de corrélation d'images volumiques pour obtenir un champ de déplacement entre chaque image et l'image de référence, pour obtenir une pluralité de champs de déplacement minimisant la différence entre les images volumiques,
   - un traitement par une méthode de réduction de la dimensionnalité (P_PCA) de la pluralité des champs de déplacement d'images pour les exprimer selon des modes propres,
   - une analyse statistique des champs exprimés selon les modes propres.

2. Procédé selon la revendication 1, dans lequel l'analyse statistique des champs exprimés selon les modes propres est une analyse graphique, au moyen d'une visualisation graphique.

3. Procédé selon la revendication 1 ou 2, dans lequel la méthode de réduction de la dimensionnalité est une analyse en composantes principales.

4. Procédé selon la revendication 3, dans lequel la pluralité d'images contient N images chacune associée à un champ de déplacement $\vec{u}(\vec{x}, n)$ avec $n \in [1, N]$, et dans lequel le traitement par analyse en composantes principales permet d'exprimer un champ de déplacement selon la formule :

$$\vec{u}(\vec{x}, n) = \sum_{j}^{p} \vec{s}_j(\vec{x}) \, \sigma_j \, \beta_{jn}$$

avec $\vec{s}_j(\vec{x})$ un mode propre,
$\sigma_j$ les valeurs propres,
$\beta_{jn}$ le mode propre droit associé, et

p le minimum entre le nombre de degrés de liberté de $\vec{u}(\vec{x},\, n)$ et N.

5. Procédé selon l'une quelconque des revendications 1 à 4, dans lequel on met en œuvre la méthode de réduction de la dimensionnalité sur une pluralité de champs de déplacement transformés $V_{ij}$ par la formule :

$$V_{ij} = C_{ik}^{-1/2} U_{kj}.$$

avec $C_{ik}$ la matrice de covariance de la pluralité de champs de déplacement $U_{kj}$.

6. Procédé selon la revendication 3, dans lequel le traitement par analyse en composantes principales permet d'exprimer un champ de déplacement $\overline{u}(\overline{x},\, n)$ avec $n \in [1,\, N]$ selon la formule :

$$\vec{u}(\vec{x}, n) = \sum_{jk}^{p} C_{ik}^{1/2} \alpha_{kj} \, \vec{\phi}_i(\vec{x}) \, \sigma_j \, \beta_{jn}$$

avec $C_{ik}$ la matrice de covariance de la pluralité de champs de déplacement, $\overline{\phi}_i(\overline{x})$ une base de fonctions de forme issues de la méthode des éléments finis, $\sigma_j$ les valeurs propres, $\alpha_{kj}$ un mode propre, et $\beta_{jn}$ le mode propre droit associé.

7. Procédé selon l'une quelconque des revendications 1 à 6, comprenant en outre une détermination d'une image moyenne $\hat{g}(\overline{x})$ :

$$\hat{g}(\vec{x}) = \left(\frac{1}{N}\right) \sum_{n=1}^{N} \tilde{g}(\vec{x}, n)$$

avec N le nombre d'images et $g(\vec{x},\, n)$ les images obtenues après application du champ de déplacement $\vec{u}(\vec{x})$ :

$$\tilde{g}(\vec{x}) = g\big(\vec{x} + \vec{u}(\vec{x})\big).$$

8. Procédé selon l'une quelconque des revendications 1 à 7, dans lequel l'une des caractéristiques de production des pièces peut varier, le procédé comprenant en outre une détermination d'un ou plusieurs modes affectés par cette caractéristique, et une détermination de l'influence de la caractéristique sur la géométrie des pièces.

9. Procédé de fabrication d'une pièce à partir du procédé selon l'une quelconque des revendications 1 à 8.

10. Procédé de suivi d'une chaîne de fabrication de pièces comprenant une acquisition d'images volumiques de tomographie aux rayons X des pièces,
une mise en œuvre du procédé de traitement selon l'une quelconque des revendications 1 à 8 sur les images volumiques de tomographie aux rayons X acquises

11. Procédé selon l'une quelconque des revendications 1 à 10, dans lequel les pièces comprennent un matériau composite.

12. Procédé selon la revendication 11, dans lequel la pièce est dans un état dans lequel aucune injection de résine n'a été mise en œuvre.

13. Procédé selon l'une quelconque des revendications 1 à 12, dans lequel la pièce est une aube de turbomachine pour aéronef.

14. Système de traitement d'une pluralité d'images volumiques de tomographie aux rayons X chacune associées à une pièce, pour quantifier la dispersion géométrique entre des pièces, la pluralité d'images volumiques comprenant une image volumique de référence, le système comportant :

- un module de corrélation d'images volumiques pour obtenir un champ de déplacement entre chaque image et l'image de référence, pour obtenir une pluralité de champs de déplacement minimisant la différence entre les images volumiques,
- un module de traitement par une méthode de réduction de la dimensionnalité de la pluralité des champs de déplacement pour les exprimer selon des modes propres,
- un module d'analyse statistique des champs exprimés selon les modes propres.

15. Programme d'ordinateur comportant des instructions pour l'exécution des étapes d'un procédé de traitement selon l'une quelconque des revendications 1 à 8, lorsque ledit programme est exécuté par un ordinateur.

**Patentansprüche**

1. Verfahren zur Verarbeitung, das von einem IT-System durchgeführt wird, einer Vielzahl von Röntgentomographie-Volumenbildern (I_1, ..., I_N), die jeweils einem Teil zugeordnet sind, um die geometrische Dispersion zwischen den Teilen zu quantifizieren, wobei die Vielzahl von Volumenbildern ein Referenz-Volumenbild umfasst, aufweisend:

   - einen Schritt (P_CIV) der Korrelation von Volumenbildern, um ein Bewegungsfeld zwischen jedem Bild und dem Referenzbild zu erhalten, um eine Vielzahl von Bewegungsfeldern zu erhalten, die den Unterschied zwischen den Volumenbildern minimieren,
   - eine Verarbeitung durch eine Reduktionsmethode der Dimensionalität (P_PCA) der Vielzahl der Bildbewegungsfelder, um sie gemäß Eigenmodi auszudrücken,
   - eine statistische Analyse der gemäß den Eigenmodi ausgedrückten Felder.

2. Verfahren nach Anspruch 1, wobei die statistische Analyse der gemäß den Eigenmodi ausgedrückten Felder eine grafische Analyse mittels einer grafischen Visualisierung ist.

3. Verfahren nach Anspruch 1 oder 2, wobei die Reduktionsmethode der Dimensionalität eine Hauptkomponentenanalyse ist.

4. Verfahren nach Anspruch 3, wobei die Vielzahl von Bildern N Bilder enthält, die jeweils einem Bewegungsfeld $\vec{u}(\vec{x}\,n)$ zugeordnet sind, mit $n \in [1, N]$, und wobei es die Verarbeitung durch Hauptkomponentenanalyse ermöglicht, ein Bewegungsfeld gemäß der Formel auszudrücken:

$$\vec{u}(\vec{x}, n) = \sum_{j}^{p} \vec{s}_j(\vec{x}) \, \sigma_j \, \beta_{jn}$$

mit $\vec{s}_j(\vec{x})$ als ein Eigenmodus,
$\sigma_j$ den Eigenwerten,
$\beta_{jn}$ dem zugehörigen rechten Eigenmodus und
p dem Minimum zwischen der Anzahl der Freiheitsgrade von $\vec{u}(\vec{x}, n)$ und N.

5. Verfahren nach einem der Ansprüche 1 bis 4, wobei die Reduktionsmethode der Dimensionalität auf eine Vielzahl von Bewegungsfeldern angewendet wird, die $V_{ij}$ transformiert wurden durch die Formel:

$$V_{ij} = C_{ik}^{-1/2} U_{kj}.$$

mit $C_{ik}$ als Kovarianzmatrix der Vielzahl von Bewegungsfeldern $U_{kj}$.

6. Verfahren nach Anspruch 3, wobei es die Verarbeitung durch Hauptkomponentenanalyse ermöglicht, ein Bewegungsfeld $\vec{u}(\vec{x}, n)$ mit $n \in [1, N]$ gemäß der Formel auszudrücken:

$$\vec{u}(\vec{x}, n) = \sum_{jk}^{p} C_{ik}^{1/2} \alpha_{kj} \, \vec{\phi}_i(\vec{x}) \, \sigma_j \, \beta_{jn}$$

mit $C_{ik}$ als Kovarianzmatrix der Vielzahl von Bewegungsfeldern,

$\vec{\phi}_i(\vec{x})$ als eine Basis von Formfunktionen aus der Finite-Elemente-Methode, $\sigma_j$ als Eigenwerte, $\alpha_{kj}$ als ein Eigenmodus und $\beta_{jn}$ als der zugehörige rechte Eigenmodus.

7. Verfahren nach einem der Ansprüche 1 bis 6, das ferner eine Bestimmung eines Durchschnittsbildes $\hat{g}(\vec{x})$ umfasst:

$$\hat{g}(\vec{x}) = \left(\frac{1}{N}\right) \sum_{n=1}^{N} \tilde{g}(\vec{x}, n)$$

mit N als Anzahl der Bilder und $\tilde{g}(\vec{x}, n)$ als die nach Anwendung des Bewegungsfeldes $\vec{u}(\vec{x})$ erhaltenen Bilder:

$$\tilde{g}(\vec{x}) = g\left(\vec{x} + \vec{u}(\vec{x})\right).$$

8. Verfahren nach einem der Ansprüche 1 bis 7, wobei eins der Herstellungsmerkmale der Teile variieren kann, wobei das Verfahren ferner eine Bestimmung eines oder mehrerer von diesem Merkmal betroffener Modi umfasst und eine Bestimmung des Einflusses des Merkmals auf die Geometrie der Teile.

9. Verfahren zur Herstellung eines Teils nach dem Verfahren nach einem der Ansprüchen 1 bis 8.

10. Verfahren zur Überwachung einer Fertigungslinie von Teilen, umfassend eine Erfassung von Röntgentomographie-Volumenbildern der Teile,
    eine Durchführung des Verarbeitungsverfahrens nach einem der Ansprüche 1 bis 8 auf die erfassten Röntgentomographie-Volumenbilder.

11. Verfahren nach einem der Ansprüche 1 bis 10, wobei die Teile ein Verbundmaterial umfassen.

12. Verfahren nach Anspruch 11, wobei sich das Teil in einem Zustand befindet, in dem keine Harzinjektion durchgeführt wurde.

13. Verfahren nach einem der Ansprüche 1 bis 12, wobei das Teil eine Turbinenschaufel für ein Flugzeug ist.

14. System zur Verarbeitung einer Vielzahl von Röntgentomographie-Volumenbildern, die jeweils einem Teil zugeordnet sind, um die geometrische Dispersion zwischen den Teilen zu quantifizieren, wobei die Vielzahl von Volumenbildern ein Referenz-Volumenbild umfasst, wobei das System aufweist:

    - ein Modul zur Korrelation von Volumenbildern, um ein Bewegungsfeld zwischen jedem Bild und dem Referenzbild zu erhalten, um eine Vielzahl von Bewegungsfeldern zu erhalten, die den Unterschied zwischen den Volumenbildern minimieren,
    - ein Modul zur Verarbeitung durch eine Reduktionsmethode der Dimensionalität (P_PCA) der Vielzahl von Bewegungsfeldern, um sie gemäß Eigenmodi auszudrücken,
    - ein Modul zur statistischen Analyse der gemäß den Eigenmodi ausgedrückten Felder.

15. Rechnerprogramm, das Anweisungen zur Ausführung der Schritte eines Verarbeitungsverfahrens nach einem der Ansprüche 1 bis 8 aufweist, wenn das Programm von einem Rechner ausgeführt wird.


**Claims**

1. A processing method, implemented by a computer system, of a plurality of volumetric images (I_1, ..., I_N) of X-ray tomography, each associated with a part, to quantify the geometric dispersion between parts, the plurality of volumetric images comprising a reference volumetric image, including:

    - a step (P_CIV) of volumetric image correlation to obtain a displacement field between each image and the reference image, to obtain a plurality of displacement fields minimizing the difference between the volumetric images,
    - processing by a dimensionality reduction method (P _PCA) of the plurality of image displacement fields to express them according to eigenmodes,

- a statistical analysis of the fields expressed according to the eigenmodes.

2. The method according to claim 1, wherein the statistical analysis of the fields expressed according to the eigenmodes is a graphical analysis, by means of a graphical visualization.

3. The method according to claim 1 or 2, wherein the dimensionality reduction method is a principal component analysis.

4. The method according to claim 3, wherein the plurality of images contains N images each associated with a displacement field $\vec{u}(\vec{x}, n)$ with $n \in [1, N]$, and wherein the processing by principal component analysis allows to express a displacement field according to the formula:

$$\vec{u}(\vec{x}, n) = \sum_{j}^{p} \vec{s}_j(\vec{x}) \, \sigma_j \, \beta_{jn}$$

With $\overline{s}_j(\overline{x})$ an eigenmode,
$\sigma_j$ the eigenvalues,
$\beta_{jn}$ the associated right eigenmode, and
p the minimum between the number of degrees of freedom of $\overline{u}(\overline{x}, n)$ and N.

5. The method according to any one of claims 1 to 4, wherein the dimensionality reduction method is implemented on a plurality of transformed displacement fields $V_{ij}$ by the formula:

$$V_{ij} = C_{ik}^{-1/2} U_{kj}$$

With $C_{ik}$ the covariance matrix of the plurality of displacement fields $U_{kj}$.

6. The method according to claim 3, wherein the processing by principal component analysis allows to express a displacement field $\overline{u}(\overline{x}, n)$ with $n \in [1, N]$ according to the formula:

$$\vec{u}(\vec{x}, n) = \sum_{jk}^{p} C_{ik}^{1/2} \alpha_{kj} \, \vec{\phi}_i(\vec{x}) \, \sigma_j \, \beta_{jn}$$

with $C_{ik}$ the covariance matrix of the plurality of displacement fields, $\overline{\phi}_i(\overline{x})$ a basis of shape functions from the finite element method, $\sigma_j$ the eigenvalues, $\alpha_{kj}$ an eigenmode, and $\beta_{in}$ the associated right eigenmode.

7. The method according to any one of claims 1 to 6, further comprising a determination of an average image ($\hat{g}(\overline{x})$:

$$\hat{g}(\vec{x}) = \left(\frac{1}{N}\right) \sum_{n=1}^{N} \tilde{g}(\vec{x}, n)$$

with N the number of images and $\tilde{g}(\overline{x}, n)$ the images obtained after application of the displacement field $\overline{u}(\overline{x})$ :

$$\tilde{g}(\vec{x}) = g\left(\vec{x} + \vec{u}(\vec{x})\right)$$
.

8. The method according to any one of claims 1 to 7, wherein one of the production characteristics of the parts may vary, the method further comprising a determination of one or more modes affected by this characteristic, and a determination of the influence of the characteristic on the geometry of the parts.

9. The method of manufacturing a part from the method according to any one of claims 1 to 8.

10. The method of monitoring a manufacturing chain of parts comprising an acquisition of volumetric images of X-ray tomography of the parts,
an implementation of the processing method according to any one of claims 1 to 8 on the acquired volumetric images of X-ray tomography.

11. The method according to any one of claims 1 to 10, wherein the parts comprise a composite material.

12. The method according to claim 11, wherein the part is in a state wherein no resin injection has been implemented.

13. Method according to any one of claims 1 to 12, wherein the part is a turbomachine blade for aircraft.

14. A system for processing a plurality of volumetric images of X-ray tomography each associated with a part, to quantify the geometric dispersion between parts, the plurality of volumetric images comprising a reference volumetric image, the system including:

   - a module for the volumetric image correlation, to obtain a displacement field between each image and the reference image, to obtain a plurality of displacement fields minimizing the difference between the volumetric images,
   - a module for the processing, by a dimensionality reduction method of the plurality of displacement fields to express them according to eigenmodes,
   - a module for the statistical analysis of the fields expressed according to the eigenmodes.

15. A computer program including instructions for executing the steps of a processing method according to any one of claims 1 to 8, when said program is executed by a computer.

[Fig.1]

$$\vec{u}(\vec{x}, n) = \sum_{j}^{p} \vec{s}_j(\vec{x})\, \sigma_j\, \beta_{jn}$$

[Fig.2]

**100**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1363095

**Littérature non-brevet citée dans la description**

- **MCKEAND AUSTIN M et al.** RELIABILITY ENGINEERING AND SYSTEM SAFETY. ELSEVIER APPLIED SCIENCE, 02 October 2020, vol. 205
- **KOUNTCHEV ROUMEN et al.** 2013 11TH INTERNATIONAL CONFERENCE ON TELECOMMUNICATIONS IN MODERN SATELLITE, CABLE AND BROADCASTING SERVICES (TELSIKS). IEEE, 16 October 2013, vol. 1, 323-332
- **SCHOLKOPF et al.** *Neural Computation*, 1998, vol. 10 (5), 1299-1319
- **TENENBAUM et al.** *Science*, December 2000, vol. 290, 2319-2323
- **SAUL ; ROWEIS.** *Science*, 22 December 2000, vol. 290 (5500), 2323-2326
- **BELKIN ; NIYOGI.** *Neural Computation*, 2003, vol. 15, 1373-1396